# EUROPEAN PATENT APPLICATION

(11) **EP 2 768 183 A1**
(43) Date of publication of application: **20.08.2014**
(21) Application number: 14155036.8
(22) Date of filing: 13.02.2014
(51) Int. Cl.: H04L 12/58, G06Q 10/10

(54) **Email management apparatus and method of electronic device**

(30) Priority: 15.02.2013 KR 20130016396
(71) Applicant: Samsung Electronics Co., Ltd, Gyeonggi-do 443-742 (KR)
(72) Inventor: Choi, Wonsuk, Gyeonggi-do 443-742 (KR); Choi, Bokun, Gyeonggi-do 443-742 (KR)
(74) Representative: Nederlandsch Octrooibureau

(57) **Abstract**

An email management apparatus and method for grouping emails based on correlation degree among the emails and displaying only the most recently received emails of the respective groups are provided. The email management apparatus of an electronic device includes a communication unit, a display panel, and a control unit which sorts, when an email is received currently through the communication unit, the currently received email and previously received emails into groups based on correlation degree between the emails and displays most recently received emails of respective groups on the display panel.

## Description

### TECHNICAL FIELD

The present disclosure relates to an email management apparatus and method. More particularly, the present disclosure relates to an email management apparatus and method for grouping emails based on correlation degree among the emails and displaying only the most recently received emails of the respective groups.

### BACKGROUND

Various email management methods are proposed to present email items to the user efficiently. One method is to sort the email items in a descending order of received date. Since this method displays the emails sorted in a temporal order, it is difficult to manage the emails due to the lack of capability of differentiating among types of emails such as returned email and forwarded email. Another method is a thread view method in which the emails under the same subject such as returned email and forwarded email are managed by group. This method is capable of managing emails by subject systematically but has a drawback by being limited in the number of email items that are capable of being displayed on a screen of portable electronic device such as a mobile terminal which is constrained in screen size storage capability. That is, the electronic devices such as a mobile terminal are limited in number of email items capable of being displayed on the screen. In this case, the user has to navigate the email items of a group for checking the content of the emails with repetitive up/down scrolling manipulation. This is laborious for the user and makes it difficult to check the emails. Furthermore, the repetitive up/down scrolling manipulations change the screen display of the email items, resulting in an increase of power consumption.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an email management apparatus and method of an electronic device that is capable of sorting the emails into groups by the correlation among emails and displaying the most recently received emails of the respective groups.

In accordance with an aspect of the present disclosure, an email management apparatus of an electronic device is provided. The apparatus includes a communication unit, a display panel, and a control unit configured to sort, when an email is received currently through the communication unit, the currently received email and previously received email into groups based on a correlation degree between the emails and to display most recently received emails of respective groups on the display panel.

In accordance with another aspect of the present disclosure, an email management method of an electronic device is provided. The method includes currently receiving an email, sorting the currently received email and previously received emails into groups based on a correlation degree between the emails, and displaying most recently received emails of respective groups.

In accordance with another aspect of the present disclosure, a computer program product is provided. The computer program product comprises instructions for causing a processor system to perform the method set forth.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a configuration of the electronic device according to an embodiment of the present disclosure;
FIG. 2 is a flowchart illustrating an email management method according to an embodiment of the present disclosure;
FIG. 3 is a flowchart illustrating the grouping operation in the email management method of FIG. 2 according to an embodiment of the present disclosure;
FIG. 4 is a diagram illustrating screen displays for explaining the email display operation according to an embodiment of the present disclosure;
FIGS. 5, 6, 7, and 8 are diagrams illustrating screen displays for explaining the email display operation according to another embodiment of the present disclosure;
FIG. 9 is a flowchart illustrating an email management method according to another embodiment of the present disclosure;
FIG. 10 is a flowchart illustrating the grouping operation in the email management method of FIG. 9 according to an embodiment of the present disclosure;
FIGS. 11A, 11B, and 12 are diagrams illustrating screen displays for explaining the email display operation according to another embodiment of the present disclosure.
The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The following description is provided to assist in a comprehensive understanding of exemplary embodiments of the email management. However, those of ordinary skill in the art will recognize that the scope and spirit of the invention can be applied to various data management, including message management as well as email management.

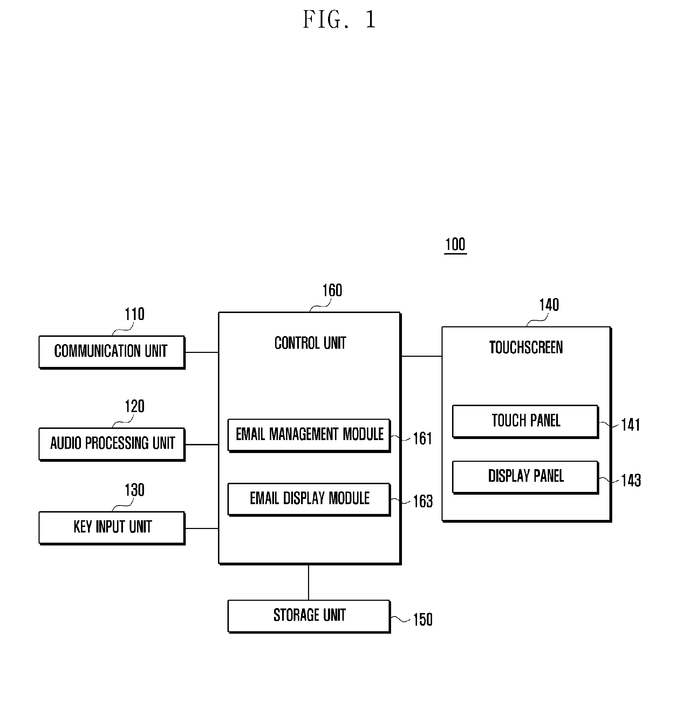

FIG. 1 is a block diagram illustrating a configuration of the electronic device according to an embodiment of the present disclosure.

Referring to FIG. 1, the electronic device 100 according to an embodiment of the present disclosure includes a communication unit 110, an audio processing unit 120, a key input unit 130, a touchscreen 140, a storage unit 150, and a control unit 160.

The communication unit 110 is responsible for transmitting/receiving signals carrying data through wireless or wired communication channels. The communication unit 110 may include a Radio Frequency (RF) transmitter to up-convert and amplify the transmission signal and an RF receiver to low noise amplify and downconvert the received signal. The communication unit 110 may transfer the data received through a communication network (not shown) to the control unit 160 and transmits the data output by the control unit 160 through the communication network.

The audio processing unit 120 may include a compression/decompress (codec)pack including a data codec for processing packet data and an audio codec for processing audio signals including voice. The audio processing unit 120 converts a digital audio signal into an analog audio signal by means of the audio codec to output the audio signal through a speaker (SPK) and converts an analog audio signal input through a microphone (MIC) into a digital signal.

The key input unit 130 receives user's key manipulation for controlling the electronic device 100 to generate a corresponding input signal for the control unit 160. The key input unit 130 may be implemented with a keypad having numeric keys, navigation keys, and complementary function keys formed on a side of the electronic device 100. In the case that the touch screen 140 is configured to receive input from a user, the key input unit 140 may be omitted.

The touch screen 140 includes a touch panel 141 and a display panel 143. The touch panel 141 and the display panel 143 may be configured as a layered structure. The touch panel 141 converts a change in pressure or capacitance at a certain position of the display panel 143 to an electric input signal. At this time, the touch panel 141 may detect the pressure as well as position and size of the touch gesture.

That is, the touch panel 141 detects a user's touch gesture and generates the corresponding touch input signal for the control unit 160. The touch input signal may include the coordinates at the touched position. If the user moves (i.e., drags) the touch tool (e.g., finger and stylus pen) that is in contact with the touch panel 141, the touch panel 141 generates a touch input signal including coordinates of the movement path for the control unit 160.

The touch panel 141 may be implemented with one of the capacitive overlay, resistive overlay, surface acoustic wave, infrared overlay, and pressure sensors. As well as these sensors, any suitable type of sensing devices may be used for the touch panel 141.

The display panel 143 displays a menu, input data, function configuration information, and other information to the user in a visual manner. The display panel 143 displays a booting screen, a standby screen, a menu screen, a telephony screen, and other application execution screens, for example.

The display panel 143 may be implemented with one of Liquid Crystal Display (LCD), Organic Light Emitting Diode (OLED), Active Matrix OLED (AMOLED), flexible display, a 3-Dimensional (3D) display.

The storage unit 150 stores programs and data necessary for operating the electronic device 100 and may be divided into a program region and a data region. The program region stores programs for controlling overall operations of the electronic device 100 and an Operating System (OS) for booting the electronic device 100, application programs for multimedia content playback, and other optional functions of the electronic device 100 such as a voice talk function, a camera function, an audio playback function, and still and motion picture playback function. The data region is the space for storing data generated in the electronic device 100 such as still and motion pictures, phonebook data, and audio data.

The control unit 160 controls overall operations of the components of the electronic device 100. Particularly in an embodiment of the present disclosure, the control unit 160 displays the most recently received emails of the respective email groups on the display panel 143. In order to accomplish this, the control unit 160 includes an email management module 161 and an email display module 163.

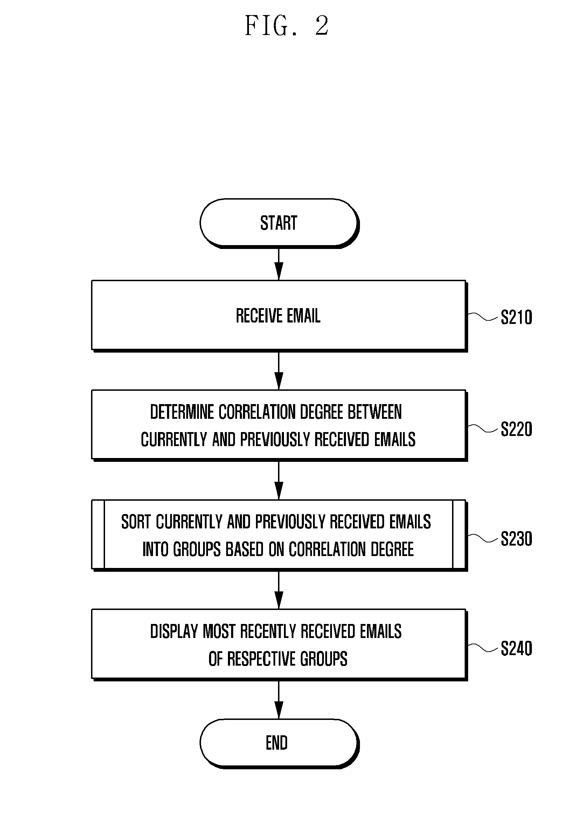

The email management procedure according to an embodiment of the present disclosure hereinafter is described with reference to FIG. 2.

FIG. 2 is a flowchart illustrating an email management method according to an embodiment of the present disclosure.

Referring to FIG. 2, if an email is received from the email server (not shown) by means of the communication unit 110 at operation S210, the email management module 161 determines a correlation degree between the currently received email and previously received emails at operation S220. The email management module 161 may determine the correlation degree between the emails based on at least one of a title, a body, a sender, a recipient, a sent date, and a received date. At this time, the email management module 161 may determine the correlation degree between the emails by comparing with the most recently received emails of the respective email groups rather than all of the previously received emails.

The correlation degree between two emails indicates presence or absence of relationship between the two emails. The correlation degree may indicate the degree of relationship between an email and an email group. The correlation degree between the emails may be a value indicating the degree of relationship between the two emails. For example, if the title and body of the currently received email 'mail_new' includes the title and body of a previously received email 'mail_received' respectively, the correlation degree between the currently received email 'mail_new' and the previously received email 'mail_received' may be expressed as 100%. If the title of the currently received email 'mail_new' includes the title of the previously received email 'mail_received' but the body of the currently received email 'mail_new' includes the body of the previously received email 'email_received' partially, the correlation degree between the two emails may be expressed as 80%. In this case, the threshold value of the correlation degree for grouping emails is preconfigured. For example, if the threshold value of the correlation degree is 70%, the emails having a correlation degree equal to or greater than 70% are sorted into one correlated email group and, otherwise, are sorted into different groups. In the following, the description is made under the assumption that the correlation degree indicates whether the two emails are correlated or not.

In more detail, the email management module 161 may determine the correlation degree between the currently received email and the previously received email based on the title of the emails. If the title of the currently received email includes the title of a previously received email or if the titles of the two emails are identical with each other, the email management module 161 determines that the two emails are correlated. For example, if the title of the currently received email 'mail_new' is 'RE: 111' and if the title of a previously received email is '111', this means that the title of the currently received email 'mail_new' includes the title of the previously received email 'mail_received' and thus the email management module 161 determines that the currently received email 'mail_new' is correlated with the previously received email 'mail_received'.

At this time, the email management module 161 may determine the correlation degree between the two emails based on the keywords constituting the title of the emails and predetermined symbols. Here, the predetermined symbols are the symbols automatically added to the title of the email when replied to or forwarded. For example, the symbol 'RE' may be added automatically to the title of the replied email and 'FW' may be added automatically to the title of the forwarded email. That is, if the title of the currently received email includes any keyword extracted from the title of the previously received email and one of the predetermined symbols, the email management module 161 determines that the currently received email and the previously received emails are correlated.

The email management module 161 may determine the correlation degree between the currently and previously received emails based on the titles and bodies. If the title and body of the currently received email include or are substantially identical with the title and body of the previously received email respectively, the email management module 161 may determine that the two emails are correlated.

Although the description is directed to the case where the correlation degree between the two emails are determined based on the titles and bodies the emails, the information used to determine the correlation degree may include at least one of a title, a body, a sender, a recipient, a sent time, a received time, or any other suitable information. For example, although titles of two emails different from each other, if the body of one email includes the body of another email and if the email address lists (e.g. lists of the email addresses of the sender and the recipient) are identical with each other, it may be determined that the two emails are correlated.

Referring to FIG. 2, the email management module 161 sorts the currently and previously received emails into groups by the correlation degree determined by the email management module 161 at operation S230. That is, the email management module 161 sorts the correlated emails into a specific group and the non-correlated emails into different groups.

At this time, the email management module 161 may store header information and email link addresses of the emails with the exception of the most recently received email of each group. That is, the email management module 161 may store the entire information on the most recently received email of each group and header information and email link addresses on other emails of each group in the storage unit 150 rather than storing entire information on all emails. Here, the email link address denotes the address information accessible to the emails stored in the email server. According to the email storage scheme configured by the user, the email management module 161 may store entire information of all emails or entire information of most recently received email of each group and only the header information and email link addresses of the other emails.

The email display module 163 may display the most recently received emails of the respective groups on the display panel 143 at operation S240. That is, the email display module 163 may display only the most recently received emails of the respective email groups. At this time, the email display module 163 may display only the basic information such as a title, a sender, and a sent time of the email on the display panel 143 and, if the user selects an email, displays the detail of the selected email such as the body of the email on the display panel 143. Also, the email display module 163 may display the basic information and partial content of the body on the display panel 143 and, if the user selects an email, the entire content of the body of the selected email on the display panel 143. Of course, the email display module 163 may display both the basic information and entire content of the body of the email on the display panel 143 simultaneously.

According to another embodiment of the present disclosure, the email server (not illustrated) may determine a correlation degree between currently and previously sent emails based on keywords, and sort the currently and previously sent emails into groups by the correlation degree. The email server may extract the most recent email from each group and send the extracted emails to the electronic device (100). The electronic device (100) may display the received emails on the display panel (143).

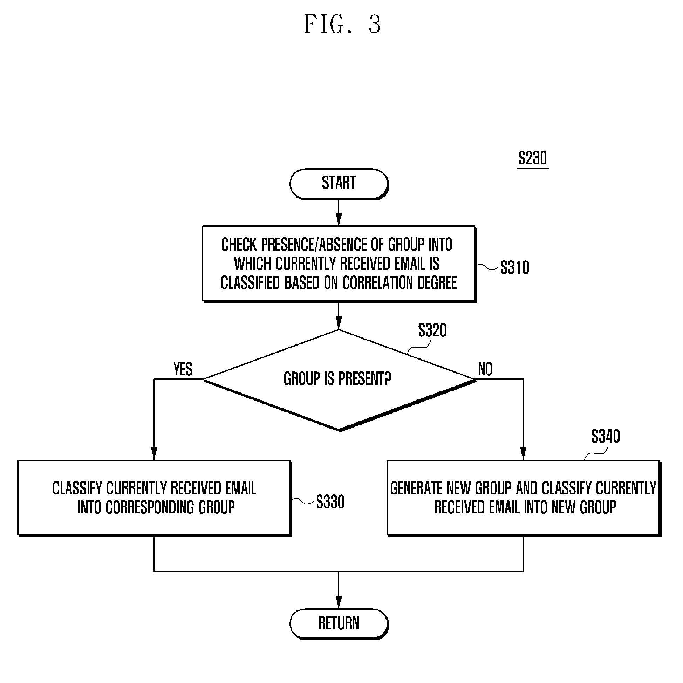

The grouping procedure according to an embodiment of the present disclosure is described hereinafter in more detail with reference to FIG. 3.

FIG. 3 is a flowchart illustrating the grouping operation in the email management method of FIG. 2 according to an embodiment of the present disclosure.

Referring to FIG. 3, the email management module 161 determines whether there is any group into which the currently received email is sorted at operation S310. That is, the email management module 161 may determine whether the currently received email is correlated with any previously received email. If there is any correlated email, the email management module 161 may determine that there is the group into which the currently received email is sorted.

If it is determined that there is a group into which the currently received email is sorted at operation S320, the email management module 161 classifies the currently received email into the corresponding group at operation S330. Otherwise if it is determined that there is no group into which the currently received email is sorted at operation S320, the email management module 161 generates a new group and classifies the currently received email into the new group at operation S340.

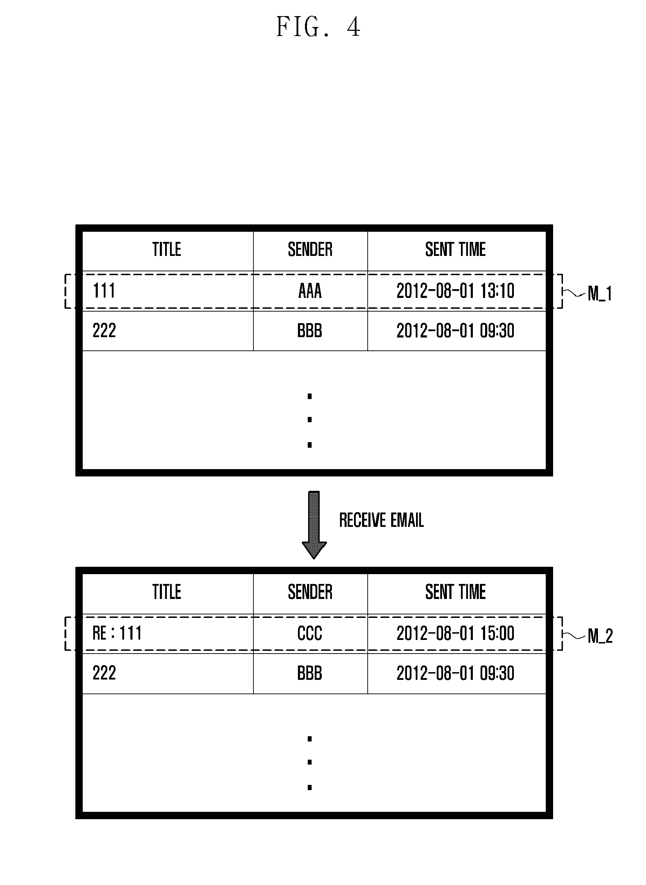

An email display operation according to an embodiment of the present disclosure is described with reference to FIG. 4.

FIG. 4 is a diagram illustrating screen displays for explaining the email display operation according to an embodiment of the present disclosure.

Referring to FIG. 4, if an email entitled 'Re: 111' and sent by 'CCC', the email management module 161 determines the correlation degrees between the currently received email (entitled 'RE: 111') and previously received emails (entitled '111', '222', etc.). Assuming that the correlation degree is determined based on the titles of the emails, the email management module 161 may determine that the currently received email entitled 'RE: 111' is correlated with the previously received email entitled '111'.

Next, the email management module 161 sorts the correlated emails entitled 'RE: 111' and '111' into a group. That is, the email management module 161 may sort the currently received email entitled 'RE: 111' into the group including the email entitled '111'.

Afterward, the email display module 163 displays the most recently received emails of the respective groups. Referring to FIG. 4, if the email entitled 'RE: 111' is received when the email entitled '111' is displayed (m_1), the email entitled 'RE: 111' is displayed (m_2) in replacement of the email entitled '111'. This means that only the most recently received email entitled 'RE: 111' is displayed as the representative email of the email group.

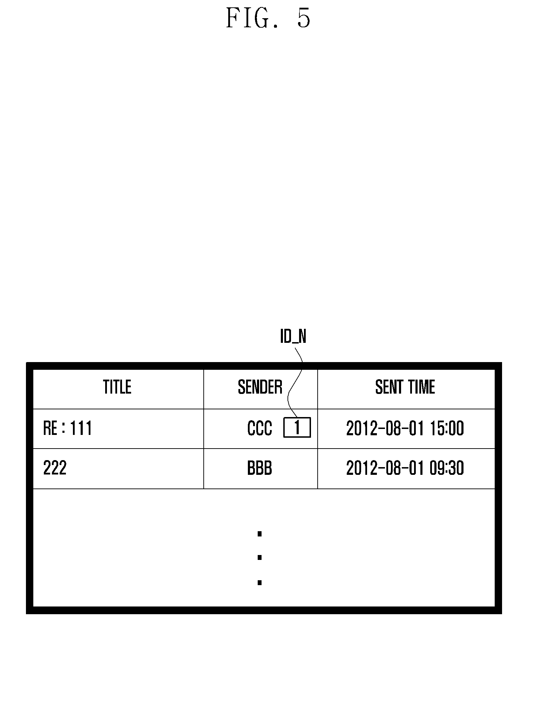

Another email display operation according to an embodiment of the present disclosure is described with reference to FIGS. 5 to 8.

FIGS. 5, 6, 7 and 8 are diagrams illustrating screen displays for explaining the email display operation according to another embodiment of the present disclosure.

Referring to FIG. 5, the email display module 163 may display the number of previously received emails of the email group along with the most recently received emails on the display panel 143. As shown in FIG. 5, the email display module 163 displays the most recently received email (email entitled 'RE: 111') along with the number of emails included in the email group as denoted by reference character ID_N on the display panel 143. With the number of received emails, the user may check the previously received emails included in the corresponding group. Although FIG. 5 is directed to the case where the number of previously received emails is presented in a rectangular box, the present disclosure is not limited thereto and may be present the number of previously received emails in various manners.

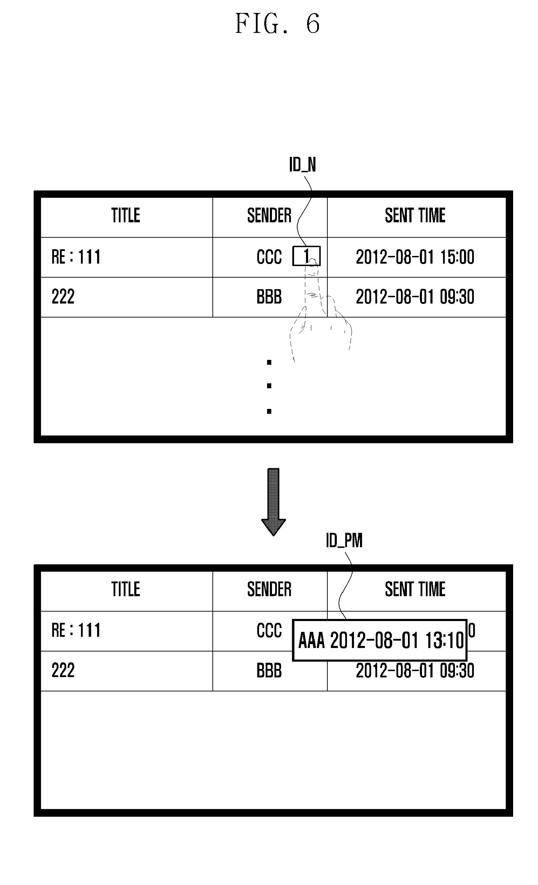

If the number of previously received emails is selected by the user, the email display module 163 may display identity information of the previously received email on the display panel 143. Here, the identity information may include a title, a sender, a sent date, etc. of each previously received email. Referring to FIG. 6, if the number of received mail ID_N is selected by the user, the email display module 163 may display the identity information as denoted by reference character ID_PM. Although FIG. 6 is directed to the case where the brief identity information is presented in a rectangular box, the present disclosure is not limited thereto and may present the brief identity information in various manners.

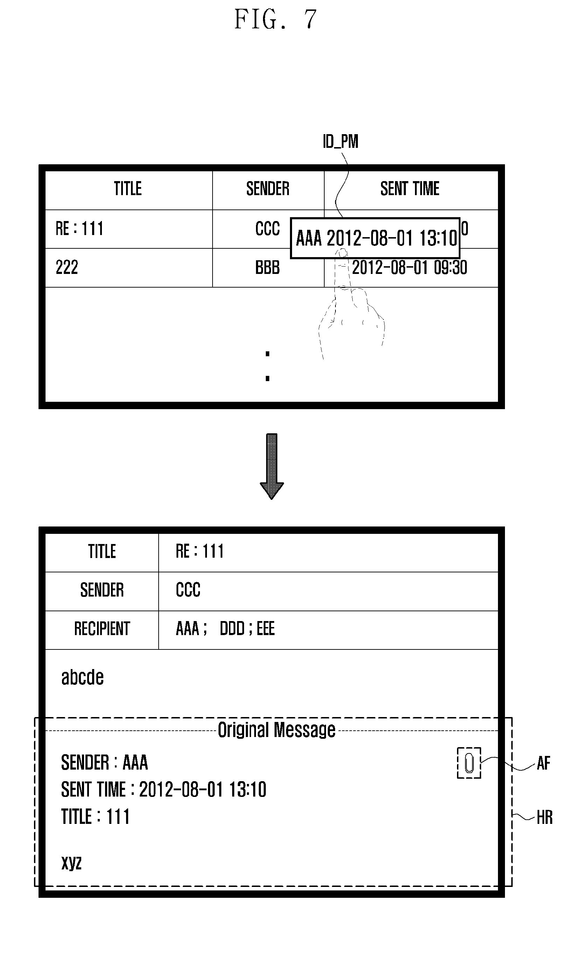

If the brief identity information on the previously received email is selected, the email display module 163 may display a part of the email selected by the user which is included in the most previously received email of the group including the selected email on the display panel 143 briefly as highlighted. As shown in FIG. 7, if the user selects the brief identity information ID_PM of the previously received email, the email display module 163 may display the email entitled 'RE: 111' with a highlight effect in order for the user to check the content of the selected email. For example, the part of the previously received email is presented with font changed in size and color or shaded as denoted by reference character HR. Accordingly, the user may check the part of the previously received email selected by the user in the most recently received email simply. If the previously received email selected by the user has an attached file indicator as denoted by reference character AF, the email display module 163 may read the attached file from the storage unit 150 or receive the attached file from the email server and display the attached file.

Although FIGS. 6 and 7 are directed to the case where there is one previously received email, the present disclosure is not limited thereto and may include the brief identity information to indicate the multiple previously received emails. In this case, if the user selects the brief identity information, a part of the previously received email selected by the user is highlighted in the content of the most recently received email. At this time, if the user selects another previously received email with a gesture, e.g. as hovering gesture, the content of the most recently received email is presented along with a part of the other previously received email reselected by the user. That is, the part of the email selected by the user is presented with the font changed in size and color or shaded according to the user's manipulation.

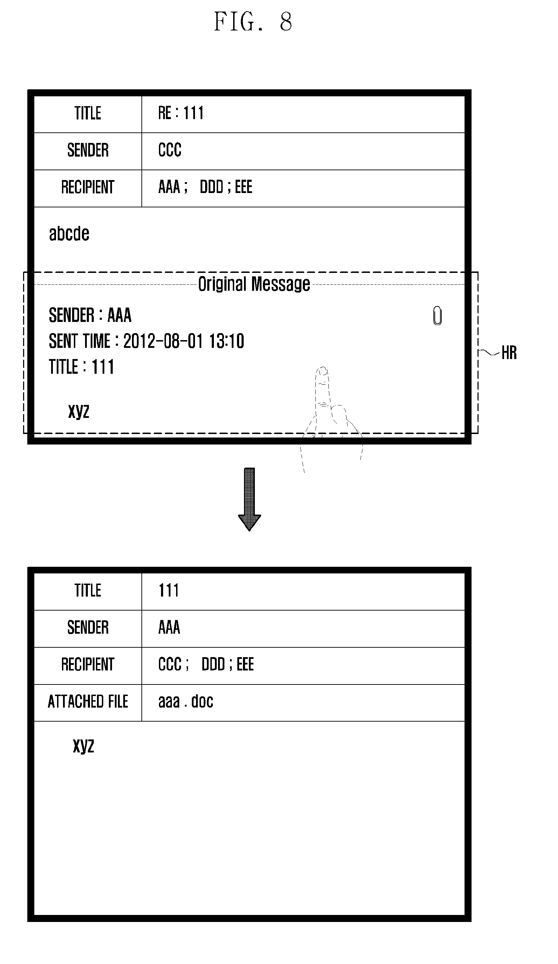

If the body of the previously received email is selected by the user, the email display module 163 may display only the email selected by the user on the display panel 143. Referring to FIG. 8, if the body of the previously received email is selected as denoted by reference character HR, the email display module 163 may display only the content of the previously received email. At this time, the email display module 163 may read the previously received email from the storage unit 150 or reconfigure the content of the previously received email with the header information of the previously received email stored in the storage unit 150 and content of the most recently received email of the corresponding group and display the read or reconfigured content. Of course, the email display module 163 may download the corresponding email from the email server using the email link address stored in the storage unit 150 and display the downloaded email.

The email management apparatus and method according to an embodiment of the disclosure sorts the emails into groups based on the correlation degree and displays the most recently received emails of the respective email groups, resulting in improvement of user's convenience. Accordingly, the user may use the email service more conveniently even with the screen size-constrained portable electronic device. Also, the email management apparatus and method according to an embodiment of the disclosure stores only the header information and email link addresses of the emails with the exception of the most recently received emails of the respective email groups so as to use the storage space efficiently.

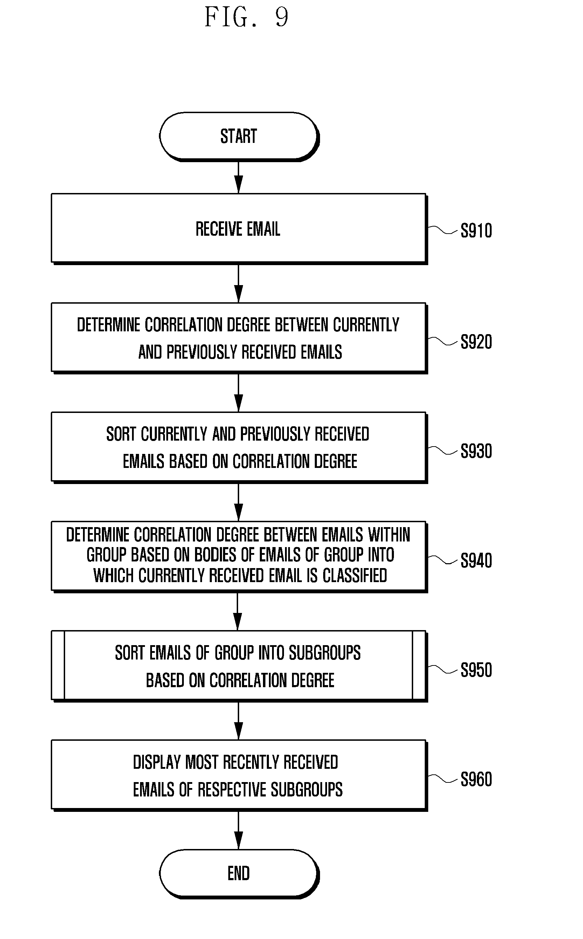

A description is made of the email management method according to another embodiment of the present disclosure hereinafter with reference to FIG. 9.

FIG. 9 is a flowchart illustrating an email management method according to another embodiment of the present disclosure.

Since the email management procedure according to this embodiment is similar to that of FIG. 2, only the parts different from the procedure of FIG. 2 are described in detail herein.

Referring to FIG. 9, if an email is received at operation S910, the email management module 161 determines a correlation degree between the currently received email and previously received emails based on their titles at operation S920. That is, if the title of the currently received email includes or identical with the title of any of the previously received emails, the email management module 161 determines that the currently and previously received emails are correlated. At this time, the email management module 161 may determine the correlation between the emails based on the keywords and predetermined symbols included in the titles of the emails.

Afterward, the email management module 161 sorts the currently and previously received emails into a group based on the determined correlation degree at operation S930. That is, the email management module 161 sorts the emails related in title into the same group and the emails non-related in title into different groups.

Next, the email management module 161 determines the correlation degree between the emails included in the group based on the body of the emails at operation S940. That is, if the body of the currently received email includes the entire body content of the previously received email without modification, the email management module 161 may determine that the currently and previously received emails are correlated. Otherwise, if the body of the currently received email includes the entire body content of the previously received email and other content, the email management module 161 may determine that the two emails are not correlated. If the body of the currently received email includes no body content of the previously received email, the email management module 161 may determine that the two emails are not correlated.

Next, the email management module 161 sorts the emails belonging to the same email group into subgroups based on the correlation degree at operation S950. That is, the email management module 161 may sort the emails having the correlated body content into the subgroup and the emails having non-correlated body contents into different subgroups.

If there are plural subgroups in the email group, the email display module 163 may display the most recently received emails of the respective subgroups on the display panel 143 at operation S960. That is, the email display module 163 may display only the most recently received emails of the subgroups include plural emails respectively. Unlike the prior embodiment in which the most recently received emails are displayed by email group, the present embodiment is characterized in that if there are subgroups under a group, the most recently received emails are display by subgroup.

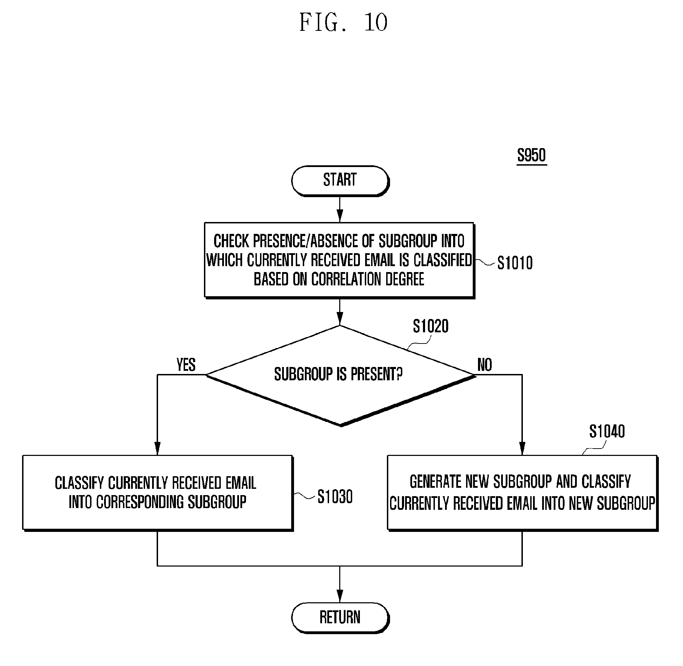

The grouping procedure according to another embodiment of the present disclosure is described hereinafter in more detail with reference FIG. 10.

FIG. 10 is a flowchart illustrating the grouping operation in the email management method of FIG. 9 according to an embodiment of the present disclosure.

Referring to FIG. 10, the email management module 161 determines whether there is any subgroup into which the currently received email is sorted based on the correlation degree at operation S1010. That is the email management module 161 may determine whether the currently received email is correlated with any of the previously received emails included in the same email group. If there is any email correlated with the currently received email, the email management module 161 determines that there is the subgroup into which the currently received email is sorted.

If it is determined that there is any subgroup into which the currently received email is sorted at operation S1020, the email management unit 161 classifies the currently received email into the corresponding subgroup at operation S1030. Otherwise if it is determined that there is no subgroup into which the currently received email is sorted at operation S1020, the email management unit 161 generates a new subgroup and classifies the currently received email into the newly generated subgroup at operation S1040.

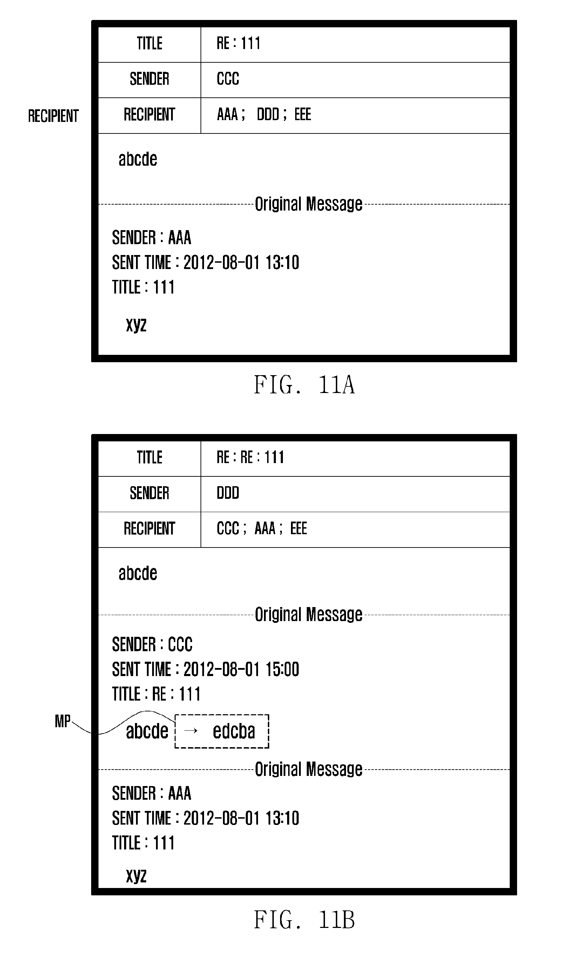

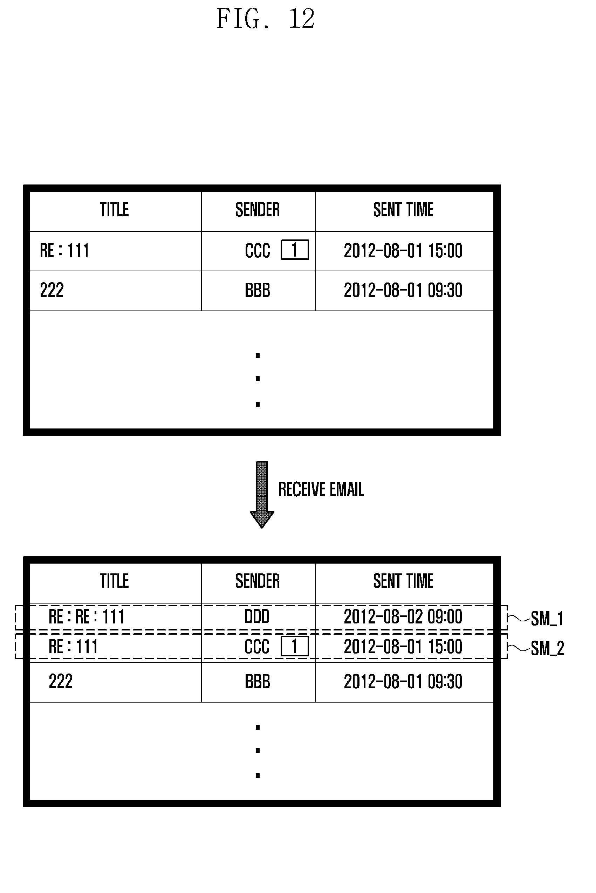

An email display operation according to another embodiment of the present disclosure is described with reference to FIGS. 11A, 11B, and 12.

FIGS. 11A, 11B, and 12 are diagrams illustrating screen displays for explaining the email display operation according to another embodiment of the present disclosure.

Referring to FIGS. 11A and 11B, an email entitled 'RE: 111' and sent by 'CCC' has been received previously, if an email entitled 'RE: RE: 111' and sent by 'DDD' is received, the email management module 161 determines the correlation degree between the email entitled 'RE: RE: 111' and the previously received emails entitled 'RE: 111'. Since the currently received email entitled 'RE: RE: 111' includes the title of the previously received email 'Re: 111', the email management module 161 classifies the currently received email entitled 'RE: RE: 111' into the group including the previously received email entitled 'RE: 111'.

Next, the email management module 161 determines the correlation degree between the emails entitled 'RE: RE: 111' and 'RE: 111' included in the group into which the currently received email entitled 'RE: RE: 111' is classified. Since the body of the currently received email entitled 'RE: RE: 111' does not entirely include the body content of the previously received email entitled 'RE: 111', the email management module 161 sorts the currently received email entitled 'RE: RE: 111' into a subgroup different from the subgroup including the previously received email entitled 'RE: 111'. As shown in FIG. 11B, since the body of the currently received email entitled 'RE: RE: 111' includes the body content of the previously received email entitled 'RE: 111' in which additional content is added as denoted by reference character MP, the email management module 161 determines that the currently received email entitled 'RE: RE: 111' and the previously received email entitled 'RE: 111' are not correlated.

Afterward, the email display module 163 displays the most recently received emails of the respective subgroups. Referring to FIG. 12, if the email entitled 'RE: RE: 111' is received when the email entitled 'RE: 111' of the first group and the email entitled '222' of the second group are displayed, the email entitled 'RE: RE: 111' of the first subgroup of the first group as denoted by reference character SM_1 and the email entitled 'RE: 111' of the second subgroup of the first group as denoted by reference character SM_2 are displayed. Since the email entitled 'RE: RE: 111' and the email entitled 'RE: 111' are included in the same group, i.e. the first group, but belong to the different subgroups, i.e. the first and second groups respectively, the email display module 163 displays the most recently received emails entitled 'RE: RE: 111' and 'RE: 111' of the respective subgroups.

Although the description is directed to the case where the control unit 160, the email management module 161, and the email display module 163 are configured separately and responsible for different functions, the present disclosure is not limited thereto. For example, the control unit 160 may be responsible for the functions of the email management module 161 and the email display module 163.

As described above, the email management apparatus and method of the disclosure sorts the emails into groups based on the correlation degree between emails and displays the most recently received emails of the respective groups, resulting in improvement of email utilization and user's convenience. Accordingly, the user may use the email service more conveniently even with the screen size-constrained portable electronic device. Also, the email management apparatus and method according to an embodiment of the disclosure stores only the header information and email link addresses of the emails with the exception of the most recently received emails of the respective email groups so as to use the storage space efficiently.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An email management apparatus of an electronic device, the apparatus comprising:
a communication unit;
a display panel; and
a control unit configured to sort, when an email is received currently through the communication unit, the currently received email and previously received emails into groups based on a correlation degree between the emails and to display most recently received emails of respective groups on the display panel.

2. The apparatus of claim 1, wherein the control unit is configured to determine the correlation degree based on at least one of a title, a body content, a sender, and a sent time.

3. The apparatus of claim 1, wherein the control unit is configured to determine the correlation degree between the emails based on keywords and predetermined symbols constituting titles of the emails.

4. The apparatus of claim 1, wherein the control unit is configured to sort the currently received email and previously received emails based on the correlation degree between titles of the currently received email and the previously received emails.

5. The apparatus of claim 4, wherein the control unit is configured to determine the correlation degree between the emails of the group using bodies of the emails included in the group into which the currently received email is sorted and sorts the emails of the group into subgroups based on the determined correlation degree.

6. The apparatus of claim 1, wherein the control unit is configured to display information indicating a number of the previously received emails of each group and the most recently received email of each group on the display panel.

7. The apparatus of claim 6, wherein the control unit is configured to display, when the information indicating a number of the previously received emails is selected by a user, identity information of the previously received emails on the display panel.

8. An email management method of an electronic device, the method comprising:
currently receiving an email;
sorting the currently received email and previously received emails into groups based on a correlation degree between the emails; and
displaying most recently received emails of respective groups.

9. The method of claim 8, wherein the sorting of the emails comprises determining the correlation degree based on at least one of a title, a body content, a sender, and a sent time.

10. The method of claim 8, wherein the sorting of the emails comprises determining the correlation degree between the emails based on keywords and predetermined symbols constituting titles of the emails.

11. The method of claim 8, wherein the sorting of the emails comprises sorting the currently received email and previously received emails based on the correlation degree between titles of the currently received email and the previously received emails.

12. The method of claim 11, wherein the sorting of the emails comprises determining the correlation degree between the emails of the group using bodies of the emails included in the group into which the currently received email is sorted; and
sorting the emails of the group into subgroups based on the determined correlation degree.

13. The method of claim 8, wherein the displaying of the most recently received emails comprises displaying information indicating a number of the previously received emails of each group and the most recently received email of each group on the display panel.

14. The method of claim 13, further comprising displaying, when the information indicating a number of the previously received emails is selected by a user, identity information of the previously received emails on the display panel.

15. A computer program product comprising a program for causing a control unit to perform the method according to any one of claims 8 to 14.
